Europäisches Patentamt

European Patent Office

Office européen des brevets

(19)

(11) Numéro de publication : **0 069 650**
**B1**

(12) # FASCICULE DE BREVET EUROPÉEN

(45) Date de publication du fascicule du brevet :
**18.09.85**

(51) Int. Cl.⁴ : **B 32 B 27/32, D 21 H  5/00,**
**B 32 B 31/20, B 32 B 17/04**

(21) Numéro de dépôt : **82401198.5**

(22) Date de dépôt : **29.06.82**

(54) **Feuille de surface pour revêtement de pièces plastiques.**

(30) Priorité : 02.07.81 FR 8113029

(43) Date de publication de la demande :
**12.01.83 Bulletin 83/02**

(45) Mention de la délivrance du brevet :
**18.09.85 Bulletin 85/38**

(84) Etats contractants désignés :
**AT BE CH DE FR GB IT LI LU NL SE**

(56) Documents cités :
**DE-A- 1 779 874**
**DE-A- 1 914 972**
**DE-A- 2 534 188**
**GB-A-  989 521**
**GB-A- 1 384 556**
**GB-A- 1 555 392**
**GB-A- 1 573 074**
**US-A- 3 276 904**
**US-A- 3 278 322**
**US-A- 3 657 044**
**US-A- 4 274 916**

(73) Titulaire : **ARJOMARI-PRIOUX Société anonyme dite**
**3, rue du Pont de Lodi**
**F-75261 Paris Cedex 06 (FR)**

(72) Inventeur : **Vallee, Antoine**
**Favetière**
**F-38850 Charavines (FR)**
Inventeur : **Goguelin, Michel**
**Le Guillermet**
**F-38850 Charavines (FR)**

(74) Mandataire : **Richebourg, Michel François et al**
**Cabinet Beau de Loménie 55, rue d'Amsterdam**
**F-75008 Paris (FR)**

Jouve, 18, rue St-Denis, 75001 Paris, France

## Description

La présente invention a pour but une nouvelle classe de matériaux thermoplastiques dits « feuilles de surface » et leur procédé de préparation. Ces feuilles sont destinées à conférer des propriétés de surface particulières aux pièces plastiques, plus particulièrement celles issues du thermoformage ou du moulage-estampage des matériaux thermoplastiques en feuilles ou en plaques, souples ou rigides, comportant ou non des fibres de renforcement.

On sait les difficultés qu'il y a souvent à concilier dans un objet plastique les propriétés mécaniques ou autres conférées par la masse de l'objet, et un état de surface présentant une ou plusieurs qualités physiques, chimiques ou visuelles particulières. Ce problème se rencontre notamment avec les thermoplastiques (polyéthylène haute densité, polypropylène, polyamide) renforcés de fibres de verre, obtenus par thermoformage ou moulage-estampage des matériaux en feuilles ou en plaques, souples ou rigides actuellement connus et qui sont préparés par divers procédés dont la voie papetière ; la demanderesse a ainsi décrit dans sa demande de brevet européen n° EP-A-39292, publiée le 04-11-1981, un matériau formé d'un mélange de base comportant 15 à 95 % en poids de fibres de renforcement, 85 à 5 % en poids d'une poudre d'au moins un matériau thermoplastique et, par rapport à ce mélange de base, 2 à 20 % en poids de pâte de polyoléfine, 1 à 30 % en poids d'un liant et 0,2 à 10 % en poids d'au moins un floculant. Ces matériaux conduisent, par transformation à chaud, à des produits finis dont l'aspect de surface et l'aptitude à recevoir une peinture sont médiocres. Or, dans l'état de la technique, on ne peut remédier à cet état de fait :

— qu'en procédant au revêtement par une moquette ou un tissu déposé préalablement au thermotraitement dans l'un des deux demi-moules, mais cette solution demeure évidemment d'un usage limité,

— ou par un procédé de surfaçage plastique, mais on fait alors appel à une opération de moulage supplémentaire.

Il a été trouvé, et c'est là le but de la présente invention, que l'on pouvait avantageusement réaliser le revêtement des produits finis ci-dessus décrits en disposant lors du thermotraitement en surface des matériaux en feuilles ou en plaques ci-dessus envisagés, un autre matériau en feuille dit « feuille de surface » obtenu par un procédé papetier et qui permet d'apporter sans étape supplémentaire un revêtement thermoplastique à l'objet fini. De plus, toutes sortes de propriétés de surface particulières peuvent être conférées à l'objet fini selon que l'on incorpore tels ou tels éléments à la composition desdites feuilles de surface que l'on peut varier facilement grâce au procédé très facilement adaptable qu'est la voie papetière.

Ces feuilles de surface sont caractérisées en ce qu'elles sont souples et comportent :
— de 30  à 90 % en poids d'au moins une pâte de polyoléfine,
— de  2  à 15 % en poids de liant,
— de  0,5 à  5 % en poids d'au moins un floculant,
le reste du matériau étant composé d'au moins un élément en poudre de granulométrie moyenne maximale aux environs de 500 micromètres choisi parmi les thermoplastiques, charges, carbone, pigments, agents de compatibilité et anti-oxydants, c'est-à-dire qu'il contient tous les éléments susceptibles par leur présence en surface de l'objet fini :

— soit d'améliorer les propriétés telles que résistance à l'abrasion, tenue en température, adhésion des peintures, conduction électrique, résistance aux agents chimiques, tenue au vieillissement,

— soit d'obtenir un aspect particulier au toucher ou à la vue : surface lisse, mate, métallisée.

Dans la présente invention, la pâte de polyoléfine, d'une part, forme au moment de la préparation de la feuille un réseau fibreux qui assure la rétention des éléments en poudre et une certaine tenue mécanique et, d'autre part, joue par fusion lors de la réalisation du produit fini le rôle pour tout ou partie de matrice thermoplastique et participe à la cohésion du revêtement de surface avec le support issu de la transformation des matériaux, en feuilles ou en plaques, actuellement connus. La quantité de pâte de polyoléfine utilisable est de 30 à 90 % en poids par rapport au poids de la feuille car, si l'on emploie moins de 30 % de pâte, la feuille ne présente plus les propriétés mécaniques suffisantes pour pouvoir être réalisée et manipulée ; si on emploie plus de 60 % en poids environ de pâte, la feuille possède des propriétés mécaniques optimales qui se conservent jusqu'à ce que l'on atteigne une teneur de 90 % en poids de ladite pâte. On peut avantageusement employer des mélanges de polyoléfines. Les feuilles de surface sont obtenues au moyen d'une technique classique dans le domaine papetier et comportent donc un liant tels ceux du tableau I ci-après, qui assure la liaison des constituants entre eux, ainsi qu'au moins un floculant tels ceux du tableau II ci-après.

Ces feuilles comprennent en outre de préférence un total de 5 % et plus en poids d'un ou plusieurs éléments en poudre dont la granulométrie moyenne maximale sera limitée par les possibilités papetières aux environs de 500 micromètres ($\mu$) et qui seront choisis selon l'état de surface désiré parmi :

1) les thermoplastiques :
    polyéthylènes, polypropylènes, polyamides, polychlorures de vinyle, polystyrènes, ABS...
2) les élastomères thermoplastiques :
    EPDM, SBS poudrettes de caoutchouc et tous autres agents de flexibilisation, étant entendu que tous ces éléments organiques cités en 1 et 2 doivent être utilisés dans des proportions telles que, lors de la mise en œuvre des feuilles en surface des pièces plastiques, ils forment entre eux et avec la masse fibreuse polyoléfinique un mélange stable sans dégradation notable des propriétés essentielles (compte tenu de la présence éventuelle des charges et/ou d'éléments fibreux broyés et/ou d'agents de compatibilité) et présentant une bonne adhésion sur l'objet ainsi revêtu,

3) les charges minérales comme les talcs, les silices... (éventuellement traitées par des agents de couplage) telles qu'on les utilise dans l'industrie des plastiques, ainsi que des fibres de verre broyées (dont la longueur moyenne est 200 micromètres (μ) c'est-à-dire que leurs propriétés ne sont plus comparables à celles des fibres de renforcement initiales),

4) carbone (conducteur ou non)

5) pigments (colorés, aluminium, nacrants...) agents de compatibilité, anti-oxydants...

L'utilisation d'un certain pourcentage de charge, notamment de fibres de verre broyées, permet de contrôler le retrait du revêtement de surface par rapport au support.

Pour la réalisation du mélange dans l'eau de tous les ingrédients ci-dessus cités composant la feuille de surface, on effectuera, successivement et dans la mesure où ils sont prévus à la composition, le mélange des éléments fibreux broyés des pâtes de polyoléfines, des fibres d'alcool polyvinylique puis des diverses poudres minérales et/ou organiques, puis éventuellement une partie de l'agent floculant puis le liant et enfin le reste de l'agent floculant avant ou après dilution jusqu'à obtenir une suspension aqueuse contenant environ 0,01 à 5 % de produits solides. Le mélange peut alors être traité sur les machines connues de fabrication du papier pour donner une feuille souple, de grammage variable dans laquelle ont été parfaitement retenus les divers éléments.

Le matériau souple ainsi obtenu dit feuille de surface est mis en œuvre, après avoir été plus ou moins réchauffé selon le procédé de transformation de l'utilisateur, en garnissant suivant le grammage et l'effet désiré de 1 à 3 couches soit le demi-moule positif, soit le demi-moule négatif ou les deux.

Après thermoformage ou moulage-estampage de ce matériau avec l'un des matériaux thermoplastiques en feuilles ou en plaques, renforcés ou non, actuellement connus, on obtient, sans que la cadence de fabrication ait été profondément modifiée, une pièce plastique présentant sur une ou deux faces un revêtement thermoplastique de caractéristiques données qui résulte de la fusion de la ou des couches de feuille de surface.

Les exemples non limitatifs ci-après illustrent l'invention.

## Exemple 1

40 g de fibres de verre non ensimé broyées sont dispersées sous agitation forte dans 0,4 litre d'eau puis sont versées dans 2,4 litres d'un mélange préalablement dispersés de pâtes synthétiques de polyéthylène et polypropylène, respectivement 20 et 40 g. Après homogénéisation convenable sous agitation modérée, on introduit 20 g d'une poudre de polypropylène de granulométrie moyenne de 80 micromètres (μ) et 40 g d'un talc de granulométrie centrée sur 16 micromètres (μ). On ajoute ensuite 20 g sec d'un liant qui est un polymère de type acrylique référencé L1 dans le tableau I ci-après, puis 2 g sec de floculant noté P1 dans le tableau II ci-après. Après dilution à environ 3,5 g de matières solides par litre, le mélange est enfin admis sur toile avec addition juste avant la formation de la feuille de 0,5 g de floculant P2, puis est essoré, séché selon la technique classique du papier. On obtient ainsi une feuille souple de grammage 500 g/m² présentant une résistance à la traction de 1,2 décanewtons/15 mm et dans laquelle ont été parfaitement retenus les divers éléments.

Une telle feuille de surface préalablement réchauffée et déposée en deux épaisseurs contre l'un des deux demi-moules donne, après moulage-estampage avec des flancs d'un matériau en feuille de polypropylène renforcé à 30 % de fibres de verre, une pièce rigide, d'épaisseur 3 mm qui, par rapport à un témoin sans revêtement, conserve des propriétés physiques excellentes mais présente en plus sur l'une de ses faces un aspect lisse et homogène.

## Exemple 2

Dans 2,4 litres d'eau, on disperse sous agitation modérée 20 g de pâte de polyéthylène et 40 g de pâte de polypropylène. Après mélange convenable, on introduit 40 g d'un talc de granulométrie moyenne 0,75 micromètres (μ), puis 10 g sec de liant L1 et enfin 1 g sec du floculant P1. La suspension est ensuite traitée comme à l'exemple 1 pour donner une feuille de 500 g/m² dont la résistance à la traction est de 1,5 décanewtons/15 mm.

Cette feuille mise en œuvre comme à l'exemple 1 mais sur les deux demi-moules permet d'obtenir une pièce plastique au toucher doux et à l'aspect brillant.

## Exemple 3

On utilise le même procédé et les mêmes produits que ceux de l'exemple 1, mais on remplace le talc par 15 g d'un noir de carbone conducteur.

**0 069 650**

La feuille ainsi réalisée puis appliquée sur une face forme un revêtement lisse particulièrement apte à être peint.

## Exemple 4

On utilise le même procédé que celui décrit dans l'exemple 2, mais la charge minérale utilisée est une silice traitée en surface par un agent de couplage et de granulométrie moyenne 1,5 micromètres ($\mu$).

## Exemple 5

On reproduit l'exemple 2 mais en ajoutant au mélange des pâtes polyoléfiniques 40 g d'une poudre de polypropylène, 10 g d'un élastomère en poudre du type styrène-butadiène ; le liant L1 et le floculant P1 sont additionnés à raison respectivement de 15 g et 1,5 g.

On réalise ainsi une feuille de surface qui permet d'apporter un revêtement souple aux objets en polypropylène armé de fibres de verre.

## Exemple 6

On répète l'exemple 5 en employant comme élastomère thermoplastique une poudre d'un copoly(éthylène-propylène) de granulométrie moyenne 500 micromètres ($\mu$).

## Exemple 7

On reprend l'exemple 1 en remplaçant le talc par 0,05 g d'un noir de carbone et 3 g d'un pigment (mica-dioxyde de titane) à reflets nacrés argentés. Après mise en œuvre avec un polypropylène renforcé à 30 % de fibres de verre, on observe une surface uniforme d'aspect gris métallisé.

## Exemple 8

On répète le précédent mais en utilisant cette fois 10 g d'un pigment à base de paillettes d'aluminium qui confèrent à l'objet fini une surface aux éclats métalliques.

## Tableau I

### Liants pouvant être utilisés

| Référence | Type de liant |
|---|---|
| L1 | Polymère renfermant 87 à 90 parties en poids de motifs acrylate d'éthyle, 1 à 8 parties en poids de motifs acrylonitrile, 1 à 8 parties de motifs N-méthylolacrylamide et 1 à 6 parties en poids de motifs acide acrylique. Dispersion aqueuse à 40-55%. |
| L2 | Polymère renfermant 60 à 75 parties en poids de motifs acrylate d'éthyle, 5 à 15 parties en poids de motifs acrylonitrile, 10 à 20 parties en poids de motifs acrylate de butyle, 1 à 6 parties en poids de motifs N-méthylolacrylamide. Dispersion aqueuse à 40-55%. |
| L3 | Polymère renfermant 60 à 65 parties en poids de motifs butadiène, 35 à 40 parties en poids de motifs acryloni- trile et 1 à 7 parties en poids de motifs acide métha- crylique. Dispersion aqueuse à 40-55% |
| L4 | Polymère renfermant 38 à 50 parties en poids de motifs styrène, 47 à 59 parties en poids de motifs butadiène et 1 à 6 parties en poids de motifs méthylacrylamide. Dispersion aqueuse à 40-55%. |

# 0 069 650

(Suite)

| Référence | Type de liant |
|---|---|
| L5 | Polymère renfermant 53 à 65 parties en poids de motifs styrène, 32 à 44 parties en poids de motifs butadiène et 1 à 6 parties en poids de motifs méthylacrylamide. Dispersion aqueuse à 40-55%. |
| L6 | Polymère renfermant 40 à 50 parties en poids de motifs styrène, 25 à 30 parties en poids de motifs butadiène, 2 à 7 parties en poids d'acide carboxylique et le reste en motifs acrylate de butyle. Dispersion aqueuse à 50%. |

## Tableau II

### Agents floculants

| Référence | Type de floculants |
|---|---|
| P1 | Sulfate d'aluminium |
| P2 | Polychlorure d'aluminium (hydroxychlorure d'aluminium) |
| P3 | Aluminate de sodium et de calcium |
| P4 | Mélange d'acide polyacrylique et de polyacrylamide en solution à 5-30% (poids/volume) |
| P5 | Polyéthylèneimine en solution à 2-50% (poids/volume) |
| P6 | Copolymère d'acrylamide et d'un monomère cationique quaternaire |
| P7 | Résine polyamine-épichlorhydrine et de diamine-propylméthyl-amine, en solution à 2-50% |
| P8 | Résine polyamide-épichlorhydrine fabriquée à partir d'épichlorhydrine, d'acide adipique, de caprolactame, de diéthylènetriamine et/ou d'éthylènediamine, en solution à 2-50% |
| P9 | Résine polyamide-polyamine-épichlorhydrine fabriquée à partir d'épichlorhydrine, d'ester diméthylique d'acide adipique et de diéthylènetriamine, en solution à 2-50% |
| P10 | Résine polyamide-épichlorhydrine fabriquée à partir d'épichlorhydrine, de diéthylènetriamine, d'acide adipique et d'éthylèneimine |
| P11 | Résine polyamide-épichlorhydrine fabriquée à partir d'acide adipique, de diéthylènetriamine et d'un mélange d'épichlor-hydrine et de diméthylamine, en solution à 2-50% |
| P12 | Résine polyamide-polyamine cationique fabriquée à partir de triéthylènetriamine |
| P13 | Produits de condensation d'acides sulfoniques aromatiques avec le formaldéhyde |
| P14 | Acétate d'aluminium |
| P15 | Formiate d'aluminium |
| P16 | Mélange d'acétate, sulfate et formiate d'aluminium |
| P17 | Chlorure d'aluminium ($AlCl_3$) |
| P18 | Amidon cationique |

Nota : lorsqu'il est question de solutions, il s'agit de solutions aqueuses

5

# 0 069 650

## Revendications

1. Feuille de surface pour le revêtement d'un article thermoplastique, caractérisée en ce qu'elle comprend :
— de 30 à 90 % en poids d'au moins une pâte de polyoléfine ;
— de 2 à 15 % en poids de liant ;
— de 0,5 à 5 % en poids d'au moins un floculant ;
le reste du matériau étant composé d'au moins un élément en poudre de granulométrie moyenne maximale limitée aux environs de 500 micromètres choisi parmi les thermoplastiques, charges, carbone, pigments, agents de compatibilité, anti-oxydants, et est fabriquée par une technique papetière classique.

2. Feuille de surface selon la revendication 1, caractérisée en ce que la pâte de polyoléfine consiste en un mélange de polyéthylène et polypropylène ; le liant est une dispersion aqueuse à 40-55 % d'un polymère contenant 87 à 90 parties en poids de motifs acrylate d'éthyle, 1 à 8 parties en poids de motifs acrylonitrile, 1 à 8 parties en poids de motifs N-méthylolacrylamide et 1 à 6 parties en poids de motifs acide acrylique ; le floculant est le sulfate d'aluminium, et l'élément en poudre contient des fibres de verre, une poudre de polypropylène et du talc.

3. Article thermoplastique constitué par : un mélange de 15 à 95 % en poids de fibres de renforcement et de 5 à 85 % en poids d'une poudre d'au moins un matériau thermoplastique et, par rapport à ce mélange, 2 à 20 % en poids d'une pâte de polyoléfine ; 1 à 30 % en poids d'un liant et 0,2 à 10 % en poids d'au moins un floculant, caractérisé en ce qu'il est revêtu par une couche de surface selon la revendication 1 ou 2 fixée audit article par moulage-estampage.

## Claims

1. A surfacing foil for coating a thermoplastic article, characterized in that it comprises :
— from 30 to 90 % by weight of at least one polyolefin pulp ;
— from 2 to 15 % by weight of a binder ;
— from 0.5 to 5 % by weight of at least one flocculant ;
the remainder being constituted by at least one powder element of average maximal granulometry limited to about 500 micrometers selected from among thermoplastics, fillers, carbon, pigments, compatibility agents, antioxydants and is manufactured according to a conventional papermaking technique.

2. A surfacing foil according to claim 1, characterized in that the polyolefin pulp consists in a mixture of polyethylene and polypropylene ; the binder is a 40-55 % aqueous dispersion of a polymer containing 87 to 90 parts by weight of ethyl acrylate units, 1 to 8 parts by weight of acrylonitrile units, and 1 to 8 parts by weight of N-methylolacrylamide units and 1 to 6 parts by weight of acrylic acid units ; the flocculant is aluminium sulphate ; and the powder element contains glass fiber, polypropylene powder, and talc.

3. A thermoplastic article constituted by a mixture of 15 to 95 % by weight of reinforcing fibers and from 5 to 85 % by weight of a powder of at least one thermoplastic material and, with respect to this mixture, 2 to 20 % by weight of a polyolefine pulp ; 1 to 30 % by weight of a binder and 0.2 to 10 % by weight of at least one flocculant, characterized in that it is coated with a surfacing foil according to claim 1 or 2 bonded to said article by molding-stamping.

## Patentansprüche

1. Oberflächenfolie zum Überziehen eines thermoplastischen Artikels, dadurch gekennzeichnet, daß sie folgendes umfaßt :
— 30 bis 90 Gew. % mindestens einer Polyolefinpaste ;
— 2 bis 15 Gew. % Bindemittel ;
— 0,5 bis 5 Gew. % mindestens eines Flockungsmittels ;
wobei der Rest des Materials aus mindestens einem pulverförmigen Element mit einer maximalen mittleren Korngröße von höchstens etwa 500 μm, ausgewählt aus Thermoplasten, Füllstoffen, Kohlenstoff, Pigmenten, Kompatibilitätsstoffen und Oxidationshemmern, zusammengesetzt und durch ein herkömmliches Verfahren der Papierindustrie hergestellt ist.

2. Oberflächenfolie nach Anspruch 1, dadurch gekennzeichnet, daß die Polyolefinpaste aus einer Mischung von Polyäthylen und Polypropylen besteht ; das Bindemittel eine wässerige Dispersion mit 40 bis 55 % eines Polymerisats mit einem Gehalt von 87 bis 90 Grundeinheit-Gewichtsteilen Äthylacrylat, 1 bis 8 Grundeinheit-Gewichtsteilen Acrylnitril, 1 bis 8 Grundeinheit-Gewichtsteilen N-Methylolacrylamid und 1 bis 6 Grundeinheit-Gewichtsteilen Acrylsäure ist ; das Flockungsmittel Aluminiumsulfat ist ; und das pulverförmige Element Glasfasern, Polypropylenpulver und Talk enthält.

3. Thermoplastischer Artikel, gebildet aus : einer Mischung aus 15 bis 95 Gew. % Verstärkungsfasern und 5 bis 85 Gew.% eines Pulvers mindestens eines thermoplastischen Materials und, bezogen auf diese Mischung, 2 bis 20 Gew.% einer Polyolefinpaste ; 1 bis 30 Gew. % eines Bindemittels und 0,2 bis 10 Gew. % mindestens eines Flockungsmittels, dadurch gekennzeichnet, daß er mit einer Oberflächenschicht gemäß Anspruch 1 oder 2 überzogen ist, welche durch Formpressen am Artikel angebracht ist.